# EUROPEAN PATENT SPECIFICATION

(11) **EP 3 866 527 B1**
(45) Date of publication and mention of the grant of the patent: **10.09.2025**
(21) Application number: 19870992.5
(22) Date of filing: 15.01.2019
(51) Int. Cl.: H04W 68/02, H04W 64/00

(54) **PAGING METHOD AND APPARATUS, EQUIPMENT, AND STORAGE MEDIUM**
FUNKRUFVERFAHREN UND -VORRICHTUNG, GERÄT UND SPEICHERMEDIUM
PROCÉDÉ ET APPAREIL DE RADIOMESSAGERIE, ÉQUIPEMENT, ET SUPPORT DE STOCKAGE

(30) Priority: 12.10.2018 CN 201811188234
(43) Date of publication of application: 18.08.2021
(73) Proprietor: ZTE Corporation, Shenzhen Guangdong 518057 (CN)
(72) Inventor: SHI, Lirong, Shenzhen, Guangdong 518057 (CN); SHA, Xiubin, Shenzhen, Guangdong 518057 (CN)
(74) Representative: Deambrogi, Edgardo
(86) International application number: PCT/CN2019/071778
(87) International publication number: WO 2020/073555

(56) References cited:
- CN-A- 105 848 098
- CN-A- 106 211 328
- CN-A- 108 401 290
- US-A1- 2004 203 771
- US-A1- 2014 364 155
- US-A1- 2015 289 110
- US-A1- 2016 128 019

## Description

### Technical Field

The present disclosure relates to, but is not limited to, the technical field of communications, and in particular to a paging method, apparatus and device, and a storage medium.

### Background

With the gradual popularization of mobile terminals such as smart phones, the traffic volume of mobile communications has experienced explosive growth over the past decade. At present, with the emergence and popularization of new applications such as ultra-high definition video and virtual reality, it is widely believed in the industry that the traffic volume of mobile communications will increase exponentially in the future decade, and will exceed 1000 times in some hot spot regions.

The 1000-times increase of traffic volume has become the maximum power to drive the 4th-generation mobile communication system (4G system) to make further evolution. To meet this requirement, the 5th-generation mobile communication system (5G system) has proposed a very challenging object of 1000-times capacity increase. The development history of mobile communications shows that cell splitting, larger bandwidth and higher spectrum efficiency are three major pillars for increasing the system capacity.

With the development of cell splitting technique, low-power transmission points (TP) are flexibly and sparsely deployed within a coverage region of a macro cell, thereby forming a multi-layered heterogeneous network (HetNet) constituted by the macro cell and small cells. The HetNet not only can improve the flexibility of cell splitting and the system capacity while ensuring coverage, so as to share the traffic pressure of the macro cell, but also can expand the coverage region of the macro cell. At the end of the study of the 4G system, in order to further increase the system capacity, the 3rd-generation wireless communication protocol (3GPP) proposed a high-density deployment small cell enhancement technology, and performed preliminary study on problems regarding small cells.

An ultra-dense network can be regarded as further evolution of the small cell enhancement technology. In the ultra-dense network, the density of TPs is further increased, the coverage region of TPs is further narrowed, and each TP serves only one terminal or a few terminals simultaneously. The ultra-dense deployment shortens the distances between the TPs and terminals, such that their transmission power can be greatly reduced and brought to a very close value, and thus the difference between uplink and downlink is also becoming smaller and smaller.

In such an ultra-dense network, as the area covered by a small cell becomes smaller, the number of small cells will increase correspondingly, and an obvious change is that the number of times user equipment (UE) moves across cells is greater than that in a macro cellular network. For UE in a connected state, the switching will be more frequent. For UE in a non-connected state, such as UE in an idle state or UE introduced in the future in a non-activated state, when these UE are called or have downlink services, they need to be paged. During paging, the cell where the UE is located is not known, and according to the macro cellular network technology, in order to increase the paging success rate, the paging region needs to be expanded correspondingly. An obvious problem in expanding the paging region is that, if a paging policy of a general macro network is used, all small cells within a tracking region range need to be paged, thereby generating a large number of paging instructions, which not only consumes a large amount of resources, but also affects the access amount and stability of devices. In order to narrow down the paging range, a method for sending a paging message to a small cell where the UE is registered is also currently proposed. However, due to high mobility characteristics, it is likely that the UE has reselected other small cells, and the paging will fail. Therefore, there is no feasible method for paging UE, especially for paging UE in an ultra-dense network.

The related document US 2016/0128019 A1 discloses a method and mobile management node for paging user equipments, the related document US 2015/0289110 A1 discloses a mobile device defined tracking area, and the related document US 2014/0364155 A1 discloses a paging area control apparatus, paging area control method, mobile communication system, and mobile station.

### Summary

Some embodiments of the present disclosure provide a paging method, apparatus and device, and a storage medium.

The present disclosure is defined by the appended set of claims.

In the paging method, apparatus and device, and storage medium provided in the described embodiments, by acquiring a target motion trajectory corresponding to a user identifier and determining a paging range according to location information carried in the target motion trajectory, the paging range corresponding to the user can be determined according to the target motion trajectory obtained by predicting a motion trajectory of the user in a future time period according to a rule of historical behaviors of the user. By virtue of the solution, the paging range can be obtained on the basis of analysis of potential regularity of the user behaviors. Based on the paging range, a paging message can be sent to corresponding user equipment in a targeted manner, which can reduce signaling transmission while increasing the paging success rate.

Additional features and advantages of some embodiments of the present disclosure will be set forth in the following description, and in part will be obvious from the description, or may be learned by practice of some embodiments of the present disclosure. The objectives and other advantages of some embodiments of the present disclosure can be achieved and obtained by the structures particularly pointed out in the description, claims and drawings.

### Brief Description of the Drawings

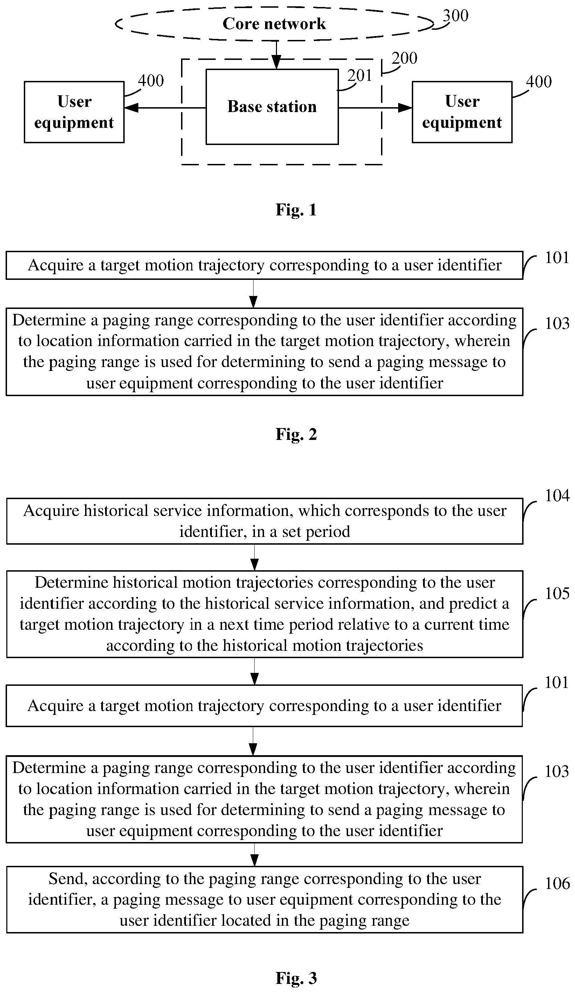

The drawings are used for providing further understanding of the technical solutions of some embodiments of the present disclosure and constitute a part of the description, and are used for explaining the technical solutions of some embodiments of the present disclosure together with the embodiments of the present disclosure, rather than constitute limitation on the technical solutions of some embodiments of the present disclosure. In the following, the embodiments of the invention are described with particular reference to Figs. 2-6 and 9. The other embodiments and/or examples of the disclosure are provided for illustrative purposes to support a better understanding of the invention.
Fig. 1 is an architecture diagram of an operating system for a paging method according to some embodiments of the present disclosure;
Fig. 2 is a flowchart of a paging method according to some embodiments of the present disclosure;
Fig. 3 is a flowchart of a paging method according to some other embodiments of the present disclosure;
Fig. 4 is a flowchart of trajectory combination according to some embodiments of the present disclosure;
Fig. 5 is a flowchart of trajectory combination according to some other embodiments of the present disclosure;
Fig. 6 is a flowchart of paging performed by a PM according to some embodiments of the present disclosure;
Fig. 7 is a flowchart of updating a target motion trajectory according to some embodiments of the present disclosure;
Fig. 8 is a flowchart of updating a target motion trajectory according to some other embodiments of the present disclosure;
Fig. 9 is a schematic diagram of a structure of a paging apparatus according to some embodiments of the present disclosure;
Fig. 10 is a flowchart of a paging method according to an example of some embodiments of the present disclosure; and
Fig. 11 is a flowchart of a paging method according to another example of some embodiments of the present disclosure.

### Detailed Description of the Embodiments

Hereinafter, the technical solutions of some embodiments of the present disclosure are further described in detail in combination with the drawings of the description and the specific embodiments. Unless defined otherwise, all technical and scientific terms used herein have the same meanings as those commonly understood by a person of ordinary skill in the art to which the present disclosure belongs. The terms used herein in the description of the present disclosure are for the purpose of describing particular embodiments only, and are not intended to limit some embodiments of the present disclosure. As used herein, the term "and/or" includes any and all combinations of one or more of the associated listed items.

As shown in fig.1, in some embodiments, an architecture diagram of a system using a paging method provided according to some embodiments of the present disclosure is provided. The system architecture includes a radio access network (RAN) 200, a core network (CN) 300, and user equipment (UE) 400. The UE establishes a network connection with the CN 300 through the RAN 200. In some embodiments, a paging apparatus 100 corresponding to the paging method includes a user data management component (DM) 11 and a paging functional component (PM) 13. The UE correspondingly sends, to the RAN 200 or the core network (CN) 300, behavior records of various services (such as call records, network access records, registration records, records about the UE establishing network connections) performed by a user via corresponding networks, so as to form service information corresponding to the user. The DM 11 is configured to acquire, from the RAN 200 and/or the CN 300, historical service information of the user in a period of time, such as historical call records, network access records, registration records, records about the UE establishing network connections, analyze the historical service information of the user, determine historical motion trajectories of the user, and then predict a future motion trajectory of the user. The PM 13 determines a paging range according to the predicted motion trajectory, and sends a paging message to the UE.

Here, the DM 11 and the PM 13 refer to network functional components determined on the basis of network functions, and are not limited to refer to network entities/nodes. By means of modularization of network functions, functional components can be organized on the basis of use cases, and are not limited to specific network elements, thereby achieving flexible deployment of network functions. For example, in some embodiments, the DM 11, as a network functional component, may be deployed in a server, such as a cloud platform, on the RAN 200 side or the CN 300 side, or in a big data processing module of a 5G network. The DM 11 may run independently and may be provided with interfaces, for example, two interfaces may be provided: one interface is used as an input interface, and information transmitted in the input interface is historical service information of the user; and the other interface is used as an output interface of a prediction result of a target motion trajectory of the user. The PM 13 may be deployed in a base station 201 on the RAN 200 side, and may be an application for acquiring the prediction result of a user motion trajectory. In some other embodiments, the DM 11 and the PM 13 may serve as independent network functional components and are both deployed in the base station 201. Here, the DM 11 and the PM 13 are respectively used as network functional components correspondingly defined in modularization of network functions, and are both described from a network topology level. Correspondingly, an interface should be understood as an interface for a correspondingly defined functional component, and is not limited to an interface of a specific network entity.

Please refer to Fig. 2, which shows a paging method provided according to some embodiments of the present disclosure, the method includes operations 101 and 103 which are described below in detail.

In operation 101, a target motion trajectory corresponding to a user identifier is acquired.

In operation 103, a paging range corresponding to the user identifier is determined according to location information carried in the target motion trajectory, wherein the paging range is used for determining to send a paging message to user equipment corresponding to the user identifier.

The user identifier refers to information capable of uniquely indicating a user's identity, and includes at least one of: a subscriber identification module (SIM) card number corresponding to the user, a user name, and a device identifier corresponding to the user, such as International Mobile Equipment Identity (IMEI) number of an Android device, a vehicle-mounted communication device identifier, and a wearable communication device identifier. User equipment (UE) shall be widely understood as any communication terminals capable of implementing communication with a communication system, and include at least one of: a mobile phone, a tablet computer, a notebook computer, a vehicle-mounted communication device, a wearable communication device, etc.

The motion trajectory may be a trajectory formed by respectively determining discrete points according to locations corresponding to various time points, and successively connecting the discrete points according to a time sequence. According to characteristics of different service data, the location may be represented by longitude and latitude, or may be represented by a certain cell or a certain node B in which a user is located. The target motion trajectory refers to a motion trajectory obtained by predicting the behavior of the user in a future time period according to a rule of historical behaviors of the user.

The paging range may refer to a set formed by paging regions determined according to the location information. Paging regions corresponding to the same location information differ according to different paging range types. The paging range types mainly include a cell level and a node B level. Paging ranges determined according to location information in the target motion trajectory correspondingly differ according to different paging range types. Taking the paging range type being a cell level as an example, when the location information is represented by longitude and latitude, the longitude and latitude need to be mapped to cells according to central locations and coverage regions of the cells, corresponding cells are determined as the paging range, and the paging range is a set formed by cells determined according to the location information in the target motion trajectory. Taking the paging range type being node B as an example, when the location information is represented by a cell, the cell needs to be mapped to a node B to which the cell belongs according to a correspondence between nodes and cells, and the paging range is a set formed by nodes B determined according to the location information in the target motion trajectory. The paging range is determined according to the location information in the target motion trajectory, and the paging range is used for determining to send a paging message to user equipment corresponding to the user identifier.

Operation 101 may be implemented in a following manner: the DM acquires a target motion trajectory corresponding to a user identifier. Operation 103 may be implemented in a following manner: the PM determines the paging range corresponding to the user identifier according to location information carried in the target motion trajectory. In some embodiments, before operation 103, the method may further include an operation that the DM sends the target motion trajectory to the PM. Operation 103 may includes the following operations: the PM acquires a preset paging range type; and the PM determines the paging range corresponding to the user identifier according to the paging range type and a mapping relationship between the location information carried in the target motion trajectory and the paging range type.

In some other embodiments, operation 101 may be implemented in a following manner: the DM acquires a target motion trajectory corresponding to a user identifier. Operation 103 may be implemented in a following manner: the DM determines the paging range corresponding to the user identifier according to location information carried in the target motion trajectory. Before operation 103, the method may further include an operation that the PM sends a preset paging range type to the DM. Operation 103 may include an operation that the DM determines the paging range corresponding to the user identifier according to the preset paging range type and a mapping relationship between the location information carried in the target motion trajectory and the paging range type.

In the paging method provided in the described embodiments of the present disclosure, by acquiring a target motion trajectory corresponding to a user identifier and determining a paging range according to location information in the predicted target motion trajectory, a paging range can be determined according to the target motion trajectory obtained by predicting a motion trajectory of a user in a future time period according to a rule of historical behaviors of the user. By virtue of the solution, the paging range can be obtained on the basis of analysis of potential regularity of the user behaviors. After determining the paging range corresponding to the user, a paging message can be sent to user equipment in a targeted manner, which can reduce signaling transmission while increasing the paging success rate.

In some embodiments, please refer to Fig. 3, the paging method furhter includes operations 104 and 105.

In operation 104, historical service information, which corresponds to the user identifier, in a set period is acquired.

The set period may refer to a preset time period, and may also refer to a time period determined on the basis of a user input instruction acquired. The set period can be determined based on the consideration of enabling an appropriate analysis on the user's behaviors so as to determine the regularity of the user's behaviors. For example, the set period may generally be set as 3 months to 6 months. The historical service information refers to relevant data formed according to behavior records corresponding to various types of services performed by the UE via corresponding networks. Based on the behavior records corresponding to these services, relevant information for indicating the location of the user at a certain time can be extracted, so as to correspondingly determine the motion trajectory of the user. The behavior records corresponding to various types of services may include: call records, network access records, registration records, records about the UE establishing network connections, etc., and each record carries user identity information, time information and location information. In some embodiments, the operation of acquiring the historical service information in the set period may be implemented in the following manner: the DM acquires, from the RAN or the CN, the historical service information corresponding to the user in the set period.

In operation 105, historical motion trajectories corresponding to the user identifier are determined according to the historical service information, and a target motion trajectory in a next time period relative to a current time is predicted according to the historical motion trajectories.

The motion trajectory may be a trajectory formed by respectively determining discrete points according to locations corresponding to various time points, and successively connecting the discrete points according to a time sequence. According to characteristics of different service data, the location may be represented by longitude and latitude, or may be represented by a certain cell or a certain node B. The operation of determining the historical motion trajectories corresponding to the user identifier according to the historical service information may be implemented in the following manner. The DM extracts, according to the user identifier, corresponding trajectory data from the historical service information of the user, wherein the trajectory data is used for indicating location information of the user at a certain time, and the representation form of the trajectory data is, e.g., (time, location). The DM determines corresponding historical motion trajectories according to the extracted trajectory data. The next time period refers to a future time period (with a set length) relative to the current time, such as a future day or a future week. The time length of the next time period is usually less than the time length of the set period, and the time length of the set period is usually an integral multiple of the time length of the next time period. The operation of predicting the target motion trajectory in the next time period according to the historical motion trajectories may be implemented in the following manner. The DM predicts behavior characteristics in the next time period relative to the current time according to a behavior rule presented by the historical motion trajectories, so as to determine a target motion trajectory in the next time period. For example, taking the set period being three months and the next time period being a future week as an example, by analyzing historical service information of a user in the past three months, according to historical motion trajectories satisfying independent normal distribution and correspondingly determined by historical service information of each workday of the user in the past three months, and according to historical motion trajectories satisfying independent normal distribution and correspondingly determined by historical service information of each non-workday in the past three months, the DM can thus respectively determine the behavior rule on workdays and the behavior rule on non-workdays of the user, and predict a target motion trajectory on workdays and a target motion trajectory on non-workdays of the user within a future week.

In some embodiments, after operation 103 of determining the paging range corresponding to the user identifier according to location information carried in the target motion trajectory, the method may further include operation 106.

In operation 106, according to the paging range corresponding to the user identifier, a paging message is sent to user equipment corresponding to the user identifier located in the paging range.

Here, the paging range may refer to a set formed by paging regions determined according to the location information. Paging regions corresponding to the same location information differ according to different paging range types. The paging range types mainly include a cell level and a node B level. Paging ranges determined according to location information in the target motion trajectory correspondingly differ according to different paging range types. Taking the paging range type being a cell level as an example, when the location information is represented by longitude and latitude, the longitude and latitude need to be mapped to cells according to central locations and coverage regions of the cells, corresponding cells are determined as the paging range, and the paging range is a set formed by cells determined according to the location information in the target motion trajectory. Taking the paging range type being node B as an example, when the location information is represented by a cell, the cell needs to be mapped to a node B to which the cell belongs according to a correspondence between nodes and cells, and the paging range is a set formed by nodes B determined according to the location information in the target motion trajectory. The operation of sending, according to the paging range corresponding to the user identifier, the paging message to the user equipment corresponding to the user identifier located in the paging range may be implemented in the following manner. The PM sends, according to the paging range corresponding to the user identifier, the paging message to the user equipment corresponding to the user identifier located in the paging range. That is, the sending of the paging message to the user is performed by the PM. In some embodiments, the PM acquires a set paging range type, determines a paging range according to location information in a target motion trajectory, and sends a paging message to user equipment according to the paging range. In some other embodiments, the PM sends a set paging range type to the DM; the DM determines a paging range according to location information in the target motion trajectory, and sends the paging range to the PM; and the PM sends, according to the paging range corresponding to the user identifier, a paging message to user equipment corresponding to the user identifier located in the paging range.

In the paging method provided in the described embodiments of the present disclosure, by acquiring historical service information in a set period, determining historical motion trajectories of a user according to the historical service information, predicting a target motion trajectory in a future time period according to the historical motion trajectories of the user, and determining a paging range according to location information in the predicted target motion trajectory, a motion trajectory of the user in a future time period can be predicted according to a rule of historical behaviors of the user, and a paging range can be determined according to the predicted motion trajectory. By virtue of the solution, the paging range can be obtained on the basis of analysis of potential regularity of the user behaviors. The paging message is sent to user equipment after the paging range corresponding to the user is determined, which not only can greatly reduce signaling transmission, but also can increase the paging success rate.

In some embodiments, before operation 105, the method further includes an operation of pre-processing the historical service information. The pre-processing includes: when it is determined that the historical service information includes service information having same location information respectively corresponding to a start time and an end time for a same service, determining the location information corresponding to the start time or the end time as the location information, which corresponds to the same service, in a continuous time period;
and may furthermore include: when it is determined that the historical service information includes invalid location information, deleting service information corresponding to the invalid location information.

Herein, the invalid location information may refer to abnormal location information, and a method for determining abnormality may be that the location information actually does not exist, a value corresponding to the location information is an unreasonable value, etc. For example, taking the location information being represented by longitude and latitude as an example, if the longitude and latitude exceed a normal range, the location information may be considered as abnormal location information. Taking the location information being represented by a cell or a node as an example, if the value of a cell ID or a node ID is an unreasonable value, the location information may be considered as abnormal location information. By deleting invalid location information, historical service information can be screened, thereby reducing interference data. When the location information respectively corresponding to the start time and end time of the same service is the same, the user can be considered to be in a stationary state by default. By virtue of the solution, the location information corresponding to the start time or the end time can be used as location information within a continuous time period corresponding to the same service, and missing values within this continuous time period between the start time and the end time corresponding to the same service can be supplemented. Taking the service being a call as an example, if the location information corresponding to the call originating point and the location information corresponding to the call terminating point are the same, it is considered that the UE is in a stationery state in this time period, and the location information in this continuous time period from the call originating point to the call terminating point may all be set as the location information corresponding to the call originating point, so as to supplement missing values of the location information in this continuous time period of the call. The pre-processing operation may be performed by the DM. By means of pre-processing of data deletion and missing value supplementing on historical service information, interference of invalid historical service information can be reduced and the integrity of available data can be ensured, which can increase the efficiency of determining historical motion trajectories according to historical service information.

In some embodiments, the operation of determining the historical motion trajectories corresponding to the user identifier according to the historical service information in operation 105 may be implemented in the following manner.

The historical service information is classified into one or more categories according to similarities between behaviors within different time periods in the set period, and historical motion trajectories corresponding to the one or more categories are determined.

The similarities between behaviors within different time periods may refer to time period classification of the set period according to behavior rule of a user in time periods of different date attributes, or time period classification of the set period according to behavior rule of a user. By classifying historical service information into one or more categories and determining historical motion trajectories corresponding to the one or more categories, a target motion trajectory in a next time period can be more accurately predicted based on the similarities between motion trajectories in the one or more categories of results.

The operation of classifying the historical service information into the one or more categories according to the similarities between behaviors within different time periods in the set period may be implemented in at least one of the following manners.
(1) Historical service information of time periods corresponding to the same date attribute is classified into the same category according to date attributes of different time periods within the set period.
(2) According to distances between motion trajectories respectively corresponding to any two time periods within the set period, classifying, into the same category, historical service information corresponding to the two time periods of which the distance between the motion trajectories is less than a set value.

The date attribute may refer to a common point capable of reflecting time characteristics contained in a certain period. For example, a day may be used as a period, and the time periods are classified into two categories, i.e., weekdays and holidays; or a week may be used as a period, and the time periods are classified into seven categories, i.e., Monday to Sunday; or a week may be used as a period, and the time periods are classified into three categories, i.e., Monday to Friday, Saturday and Sunday, etc. The classification of historical service information according to date attributes of different time periods is mainly a classification based on similarities between behaviors of a user in the same date attribute, which facilitates more accurate determination of the behavior rule of the user in the same date attribute.

The classification of time periods can also be set and determined according to common cycle periods of the user behaviors. For example, the time periods may be preset to be classified based on days, and days with similar motion trajectories are classified into the same category according to the similarity between daily motion trajectories of the user. It should be noted that the time periods may also be preset to be classified based on one or more hours. The similarity between motion trajectories of two time periods can be determined according to the distance between the motion trajectories respectively corresponding to the two time periods, for example, when the maximum distance between the two motion trajectory lines is less than a set distance threshold, it can be considered that the similarity between the two corresponding motion trajectories is high, and the two motion trajectories can be classified into the same category. Alternatively, an area between corresponding trajectory lines is calculated according to start time points and end time points corresponding to two time periods, and when the area is less than a set area threshold, it may be considered that the similarity between the two corresponding motion trajectories is high, and the two motion trajectories can be classified into the same category.

It can be understood that in the operation that the DM classifies the historical service information into the one or more categories according to the similarities between behaviors within different time periods in the set period, the two classification rules, i.e., classifying according to date attributes of different time periods and classifying according to distances between motion trajectories corresponding to two time periods, may be alternatively selected, or may also be both included. When the two classification rules are both included, historical motion trajectories under the corresponding classification rules may be obtained respectively, and target motion trajectories in a next time period are obtained respectively on the basis of the historical motion trajectories under the corresponding classification rules.

In some embodiments, the operation of determining the historical motion trajectories corresponding to the user identifier according to the historical service information in operation 105 may be implemented in the following manner.

Motion trajectories corresponding to the user identifier are generated according to time and location information carried in the historical service information and corresponding to historical services.

It is determined whether any two motion trajectories meet a trajectory combination condition, and in a case where the two motion trajectories satisfy the trajectory combination condition, the two motion trajectories are combined.

The historical motion trajectories corresponding to the user identifier are obtained according to the motion trajectories after the combination.

Here, in the process that the DM determines the historical motion trajectories corresponding to the user according to the historical service information, combination can be performed on the basis of whether the motion trajectories meet a trajectory combination condition, thereby reducing the total number of historical motion trajectories. The trajectory combination condition may include: two motion trajectories have an overlapping point, and the area between the overlapping point and the motion trajectories is less than a first threshold; or the area of two motion trajectories in a set time interval is less than a second threshold.

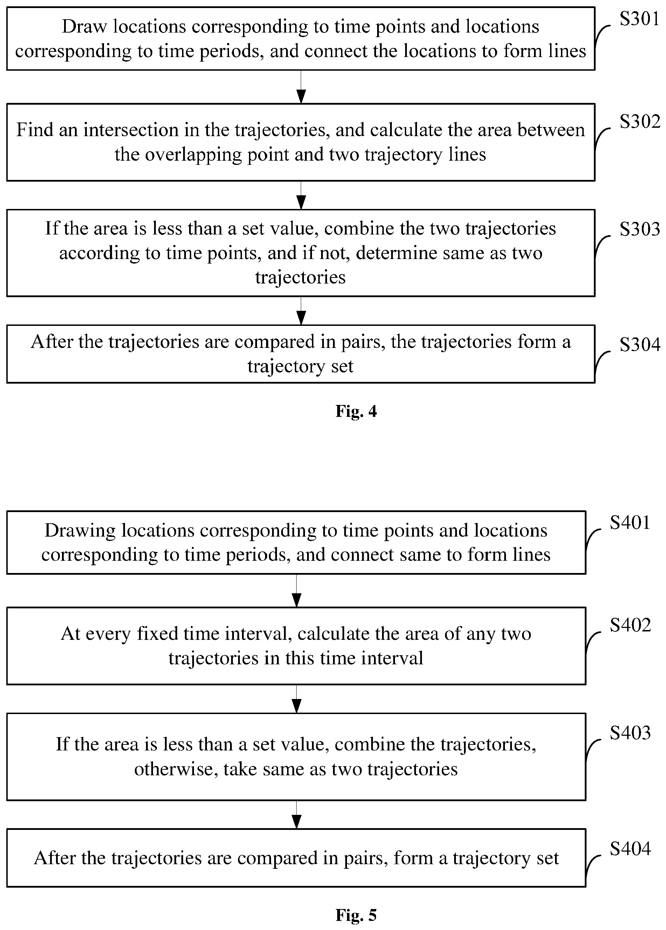

Please refer to Fig. 4, taking that the trajectory combination condition is that two motion trajectories have an overlapping point, and the area between the overlapping point and the motion trajectories is less than a first threshold as an example, the combination processing on the motion trajectories includes the following operations S301 to S304.

In operation S301, locations corresponding to time points and locations corresponding to time periods are drawn and connected to form lines, that is, motion trajectories of the user are generated according to time and location information carried in the historical service information and corresponding to historical services.

In operation S302, an intersection in the trajectories is found, and the area between the overlapping point and two trajectory lines is calculated. For example, the overlapping point is connected respectively to respective endpoints of the two trajectory lines, and the area enclosed by the overlapping point and a connecting line of two endpoints of corresponding trajectory lines is determined as the area between the overlapping point and the corresponding trajectory lines.

In operation S303, if the area is less than a set value, the two trajectories are combined according to time points, and if not, the two trajectories are determined as two trajectories.

In operation S304, after the trajectories are compared in pairs, the trajectories form a trajectory set. Herein, the trajectory set refers to historical motion trajectories corresponding to the user obtained according to the motion trajectories subjected to combination processing.

Please refer to Fig. 5, taking that the trajectory combination condition is that the area of two motion trajectories in a set time interval is less than a second threshold as an example, the combination processing on the motion trajectories includes the following operations S401 to S404.

In operation S401, locations corresponding to time points and locations corresponding to time periods are drawn and connected to form lines, that is, motion trajectories of the user are generated according to time and location information carried in the historical service information and corresponding to historical services.

In operation S402, at every fixed time interval, the area of any two trajectories in this time interval is calculated. For example, endpoints of the two trajectories respectively corresponding to this time interval are determined, and the area enclosed by connecting lines of the endpoints is determined as the area of the two trajectories at this time interval.

In operation S403, if the area is less than a set value, the trajectories are combined, otherwise, the trajectories are taken as two trajectories.

In operation S404, after the trajectories are compared in pairs, a trajectory set is formed.

In the described embodiments of the present disclosure, by setting the trajectory combination condition to perform combination processing on historical motion trajectories determined on the basis of historical service information, the total number of trajectories can be reduced, and relatively more representative historical motion trajectories are selected for predicting a target motion trajectory of a user in a next time period relative to the current time.

It should be noted that in the present embodiment, the pairwise determination of the historical motion trajectories on the basis of the trajectory combination condition may be performed after the historical motion trajectories are classified into one or more categories. After the historical motion trajectories corresponding to the one or more categories are determined, whether two of the historical motion trajectories included in the one or more categories meet the trajectory combination condition is respectively determined, so as to obtain a set of historical motion trajectories corresponding to the one or more categories.

In some embodiments, the operation of predicting the target motion trajectory in the next time period relative to the current time according to the historical motion trajectories in operation 105 may be implemented in the following manner.

The target motion trajectory in the next time period relative to the current time is predicted according to historical motion trajectories having a confidence probability satisfying a set condition in the historical motion trajectories.

Here, the operation that the DM predicts the target motion trajectory in the next time period relative to the current time according to historical motion trajectories having a confidence probability satisfying a set condition in the historical motion trajectories may be implemented in the following manner. Historical motion trajectories corresponding to the one or more categories all satisfy independent normal distribution, a normal distribution function is used to calculate a confidence probability at a certain future moment of a certain trajectory, so as to predict a future motion trajectory, and finally a target motion trajectory of a user in a future time period, i.e., a next time period relative to the current time is obtained. The judgment on whether the confidence probability satisfies a set condition may be implemented in the following manner. A threshold of confidence probability is set, and if the confidence probability of a historical motion trajectory is greater than the threshold, it can be considered that the set condition is satisfied; or confidence probabilities respectively corresponding to historical motion trajectories are determined, and if the confidence probability of a historical motion trajectory has a maximum value, it can be considered that the set condition is satisfied. Taking the next time period being a future day relative to the current time as an example, according to the confidence probability of each historical motion trajectory in a set of historical motion trajectories of the user in the future day, a historical motion trajectory of which the confidence probability satisfies a set condition can be determined as a target motion trajectory. Taking the next time period being a future week relative to the current time as an example, according to the confidence probability of each historical motion trajectory in a set of historical motion trajectories of the user in each day of the future week, a historical motion trajectory of which the confidence probability satisfies a set condition can be determined as a target motion trajectory. It can be understood that the number of target motion trajectories may be one or more, and differs according to the time length of the next time period and different set conditions of confidence probability.

In some embodiments, the operation of determining the paging range corresponding to the user identifier according to location information carried in the target motion trajectory in operation 103 may be implemented in the following manner.

The paging range corresponding to the user identifier is determined according to a paging range type and a mapping relationship between location information carried in the target motion trajectory and the paging range of a corresponding paging range type.

The paging range types mainly include a cell level and a node B level. With regard to different paging range types, the mapping relationships between location information in the target motion trajectory and paging ranges correspondingly differ, and thus the determined paging ranges also correspondingly differ. If the paging range type is a cell level, the mapping relationships between location information and paging ranges refer to mapping relationships between location information and cells, and paging ranges determined according to the mapping relationships refer to a set formed by cells. If the paging range type is a node B level, the mapping relationships between location information and paging ranges refer to mapping relationships between location information and nodes B, and paging ranges determined according to the mapping relationships refer to a set formed by nodes B. Here, the PM determines, according to the correlation between location information and paging ranges of corresponding types, paging regions under the type of paging range corresponding to each piece of location information, so as to obtain paging ranges corresponding to the location information. Taking the paging range type being a cell level as an example, when the location information is represented by longitude and latitude, the longitude and latitude need to be mapped to cells according to central locations and coverage regions of the cells. After cells corresponding to the location information are obtained, corresponding cells are determined as paging ranges, and the paging ranges are a set formed by cells determined according to the location information in the target motion trajectory. Taking the paging range type being node B as an example, when the location information is represented by a cell, the cell needs to be mapped to nodes B to which the cell belongs according to the nodes to which the cell belongs. After nodes B corresponding to the location information are obtained, the paging ranges are a set formed by nodes B determined according to the location information in the target motion trajectory.

In some embodiments, the operation of sending, according to the paging range corresponding to the user identifier, a paging message to user equipment located in the paging range in operation 106 may be implemented in the following manner.

The paging message is sent to at least one corresponding ultra-dense network (UDN) cell in the paging range, and the at least one UDN cell sends the paging message to the user equipment corresponding to the user identifier via a common channel.

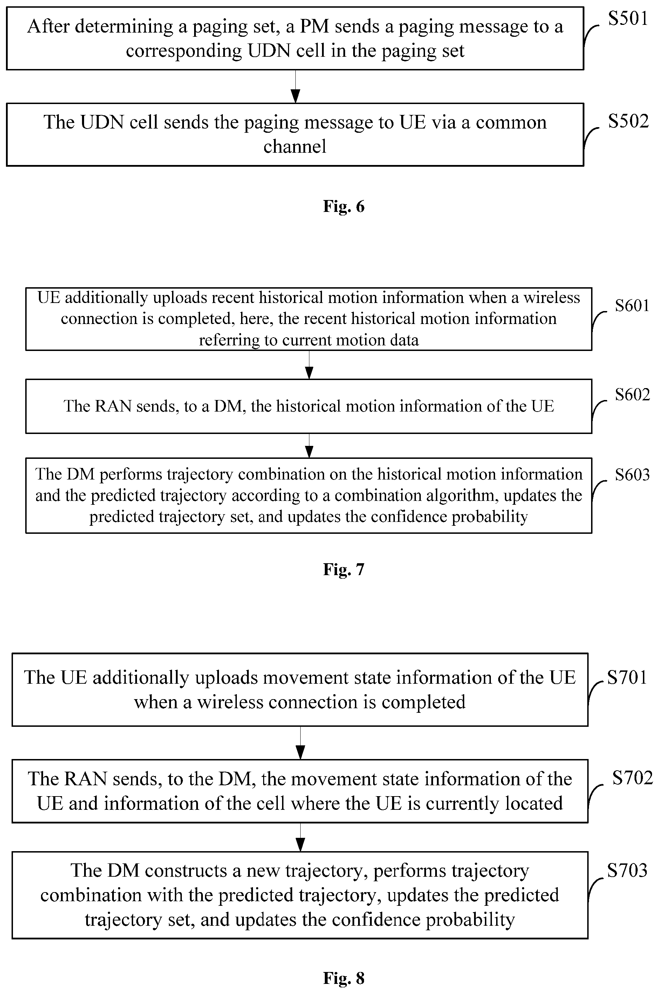

Here, the paging range may refer to a set formed by paging regions determined according to the location information. Please refer to Fig. 6, the operation that the PM sends a paging message to user equipment according to a paging range may include: S501, after determining a paging set, the PM sends a paging message to a corresponding UDN cell in the paging set; and S502, the UDN cell sends the paging message to UE via a common channel.

In some embodiments, after the operation of determining the historical motion trajectories corresponding to the user identifier according to the historical service information, and predicting the target motion trajectory in the next time period relative to the current time according to the historical motion trajectories in operation 105, the method may further include the following operations.

Motion data uploaded by user equipment when establishment of a wireless connection is completed is acquired, and a current motion trajectory corresponding to the user identifier is generated according to the motion data. Alternatively, a current movement state uploaded by user equipment when establishment of a wireless connection is completed and current location information of the user equipment are acquired, and a current motion trajectory corresponding to the user identifier is generated according to the current movement state and the current location information.

The target motion trajectory is updated according to the current motion trajectory.

Here, the DM also acquires the recent latest motion data in real time by acquiring, in real time, the motion data uploaded by UE when establishment of a wireless connection is completed, so as to update the prediction of a future motion trajectory. The motion data may refer to motion data in a set time period before the moment that the UE completes establishment of a wireless connection, and may also be referred to as recent motion data. In this way, by predicting a motion trajectory in a future next time period according to historical motion trajectories of a user within a set period, while fully using the characteristic that the user's behaviors have high regularity, the latest motion data is further collected to update the predicted motion trajectory in the next time period, and thus when there may be some sudden and unpredictable behavior changes, the target motion trajectory can still be updated according to the current number of motion obtained in real time.

The operation of updating the target motion trajectory according to the current motion trajectory may be implemented in the following manner.

It is determined whether the current motion trajectory and the target motion trajectory satisfy a trajectory combination condition. In a case where the current motion trajectory and the target motion trajectory satisfy the trajectory combination condition, the current motion trajectory and the corresponding target motion trajectory are combined. In a case where the current motion trajectory and the target motion trajectory do not satisfy the trajectory combination condition, the current motion trajectory is added as a new target motion trajectory.

Here, if the current motion trajectory and any target motion trajectory satisfy the trajectory combination condition, it may be understood that the target motion trajectory obtained in operation 105 is consistent with the motion data at the current moment. By combining the current motion trajectory with the target motion trajectory, the number of target motion trajectories can be reduced, and the calculation amount for determining paging ranges on the basis of location information in target motion estimation is reduced. If the current motion trajectory and any target motion trajectory do not satisfy the trajectory combination condition, it can be understood that the current motion state of the user is not sufficiently consistent with a behavior rule within a set period, and the current motion trajectory is added as a new target motion trajectory, thereby increasing the coverage range of paging ranges in the target motion trajectory, so as to ensure that the paging success rate can be increased.

Please refer to Fig. 7, in some embodiments, the operation that the DM updates the target motion trajectory according to the current motion trajectory may include operations S601 to S603.

In operation S601, UE additionally uploads recent historical motion information when a wireless connection is completed. Here, the recent historical motion information refers to motion data uploaded by the UE when establishment of a wireless connection is completed.

In operation S602, the RAN sends, to the DM, the historical motion information of the UE.

In operation S603, the DM performs trajectory combination on the historical motion information and the predicted trajectory according to a combination algorithm, updates the predicted trajectory set, and updates the confidence probability. Here, the predicted trajectory refers to the target motion trajectory obtained on the basis of operation 105, wherein the target motion trajectory is a trajectory set of one or more historical motion trajectories of which the confidence probability satisfies a set condition. The combination algorithm may refer to the set trajectory combination condition as shown in Fig. 5 and/or Fig. 6.

Please refer to Fig. 8, in some other embodiments, the operation that the DM updates the target motion trajectory according to the current motion trajectory may include operations S701 to S703.

In operation S701, the UE additionally uploads movement state information of the UE when a wireless connection is completed. Here, the movement state of the UE may be high-speed movement, middle-speed movement, or low-speed movement.

In operation S702, the RAN sends, to the DM, the movement state information of the UE and information of the cell where the UE is currently located. Here, the information of the cell where the UE is currently located may be information of the cell correspondingly determined when the UE completes the wireless connection, and the UE can predict the movement distance of the UE according to the movement state information of the UE and the information of the cell where the UE is currently located.

In operation S703, the DM constructs a new trajectory, performs trajectory combination with the predicted trajectory, updates the predicted trajectory set, and updates the confidence probability. Here, the predicted trajectory refers to the target motion trajectory obtained on the basis of operation 105, wherein the target motion trajectory is a trajectory set of one or more historical motion trajectories of which the confidence probability satisfies a set condition, and the combination algorithm used to perform trajectory combination may refer to the set trajectory combination condition as shown in Fig. 5 and/or Fig. 6.

In the described embodiments of the present disclosure, the recent latest motion data is acquired in real time to update the prediction of a future motion trajectory. In this way, by predicting a motion trajectory in a future next time period according to historical motion trajectories of a user within a set period, and updating the predicted motion trajectory in the next time period based on the latest collected motion data, while fully using the characteristic that the user's behaviors have high regularity to predict the future motion trajectory of the user, when there may be some sudden and unpredictable behavior changes, the target motion trajectory can still be updated according to the current number of motion obtained in real time, thereby ensuring the accuracy of prediction of a target motion trajectory.

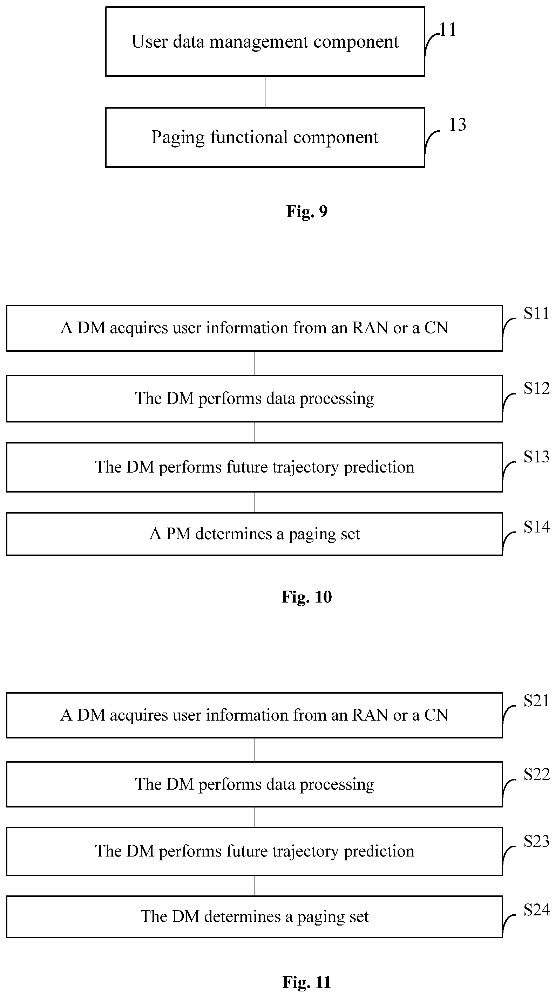

As shown in Fig. 9, in some embodiments, a paging apparatus is provided. The paging apparatus includes: a user data management component (DM) 11, configured to acquire a target motion trajectory corresponding to a user identifier, and determine a paging range corresponding to the user identifier according to location information carried in the target motion trajectory. In the embodiment, the paging range is used for determining to send a paging message to user equipment corresponding to the user identifier.

The DM 11 is further configured to acquire historical service information, which corresponds to the user identifier, in a set period; and determine historical motion trajectories corresponding to the user identifier according to the historical service information, and predict a target motion trajectory in a next time period relative to a current time according to the historical motion trajectories.

The DM 11 may be configured to determine the historical motion trajectories corresponding to the user identifier according to the historical service information in the following manner: generating motion trajectories corresponding to the user identifier according to time and location information carried in the historical service information and corresponding to historical services; determining whether any two motion trajectories satisfy a trajectory combination condition, and combining the two motion trajectories in a case where the two motion trajectories satisfy the trajectory combination condition; and obtaining the historical motion trajectories corresponding to the user identifier according to the motion trajectories after the combination.

The DM 11 may be configured to predict the target motion trajectory in the next time period relative to the current time according to the historical motion trajectories in the following manner: predicting the target motion trajectory in the next time period relative to the current time according to historical motion trajectories having a confidence probability satisfying a set condition in the historical motion trajectories.

The DM 11 is further configured to, after predicting the target motion trajectory in the next time period relative to the current time according to the historical motion trajectories, acquire motion data uploaded by user equipment when establishment of a wireless connection is completed, and generate a current motion trajectory corresponding to the user identifier according to the motion data; or acquire a current movement state uploaded by user equipment when establishment of a wireless connection is completed and current location information of the user equipment, and generate a current motion trajectory of the user according to the current movement state and the current location information; and update the target motion trajectory according to the current motion trajectory.

The DM 11 may be configured to update the target motion trajectory according to the current motion trajectory in the following manner: determining whether the current motion trajectory and the target motion trajectory satisfy a trajectory combination condition; in a case where the current motion trajectory and the target motion trajectory satisfy the trajectory combination condition, combining the current motion trajectory and the corresponding target motion trajectory; and in a case where the current motion trajectory and the target motion trajectory do not satisfy the trajectory combination condition, adding the current motion trajectory as a new target motion trajectory.

The DM 11 is further configured to, before determining the historical motion trajectories corresponding to the user identifier according to the historical service information, perform the following operation: when it is determined that the historical service information includes service information having same location information respectively corresponding to a start time and an end time for a same service, determining the location information corresponding to the start time or the end time as the location information, which corresponds to the same service, in a continuous time period, and may be configured to perform the following operation: when it is determined that the historical service information includes invalid location information, deleting service information corresponding to the invalid location information.

The DM 11 may be configured to determine the historical motion trajectories corresponding to the user identifier according to the historical service information in the following manner: classifying the historical service information into the one or more categories according to the similarities between behaviors within different time periods in the set period; and determining historical motion trajectories corresponding to the one or more categories.

The DM 11 may be configured to classify the historical service information into the one or more categories according to the similarities between behaviors within different time periods in the set period in at least one of the following manners: classifying historical service information of time periods corresponding to the same date attribute into the same category according to date attributes of different time periods within the set period; and according to distances between motion trajectories respectively corresponding to any two time periods within the set period, classifying, into the same category, historical service information corresponding to the two time periods of which the distance between the motion trajectories is less than a set value.

The DM 11 may be configured to determine the paging range corresponding to the user identifier according to location information carried in the target motion trajectory in the following manner: determining the paging range corresponding to the user identifier according to a paging range type and a mapping relationship between location information carried in the target motion trajectory and the paging range.

The paging apparatus may further include a paging functional component (PM) 13. The PM 13 is configured to send, according to the paging range corresponding to the user identifier, a paging message to user equipment corresponding to the user identifier located in the paging range.

The PM 13 is configured to send the paging message to at least one corresponding ultra-dense network (UDN) cell in the paging range, so as to send, through the at least one UDN cell, the paging message to the user equipment corresponding to the user identifier via a common channel.

In some embodiments, a paging apparatus is provided, including: a paging functional component (PM) 13, configured to acquire a target motion trajectory corresponding to a user identifier; and determine a paging range corresponding to the user identifier according to location information carried in the target motion trajectory. In the embodiments, the paging range may be used for determining to send a paging message to user equipment corresponding to the user identifier.

The apparatus may further include a user data functional component (DM) 11. The DM 11 is configured to acquire historical service information, which corresponds to the user identifier, in a set period; and determine historical motion trajectories corresponding to the user identifier according to the historical service information, and predict a target motion trajectory in a next time period relative to a current time according to the historical motion trajectories.

The DM 11 may be configured to determine the historical motion trajectories corresponding to the user identifier according to the historical service information in the following manner: generating motion trajectories corresponding to the user identifier according to time and location information carried in the historical service information and corresponding to historical services; determining whether any two motion trajectories satisfy a trajectory combination condition, and combining the two motion trajectories in a case where the two motion trajectories satisfy the trajectory combination condition; and obtaining the historical motion trajectories corresponding to the user identifier according to the motion trajectories after the combination.

The DM 11 may be configured to predict the target motion trajectory in the next time period relative to the current time according to the historical motion trajectories in the following manner: predicting the target motion trajectory in the next time period relative to the current time according to historical motion trajectories having a confidence probability satisfying a set condition in the historical motion trajectories.

The DM 11 is further configured to, after predicting the target motion trajectory in the next time period relative to the current time according to the historical motion trajectories, acquire motion data uploaded by user equipment when establishment of a wireless connection is completed, and generate a current motion trajectory corresponding to the user identifier according to the motion data; or acquire a current movement state uploaded by user equipment when establishment of a wireless connection is completed and current location information of the user equipment, and generate a current motion trajectory of the user according to the current movement state and the current location information; and update the target motion trajectory according to the current motion trajectory.

The DM 11 may be configured to update the target motion trajectory according to the current motion trajectory in the following manner: determining whether the current motion trajectory and the target motion trajectory satisfy a trajectory combination condition; in a case where the current motion trajectory and the target motion trajectory satisfy the trajectory combination condition, combining the current motion trajectory and the corresponding target motion trajectory; and in a case where the current motion trajectory and the target motion trajectory do not satisfy the trajectory combination condition, adding the current motion trajectory as a new target motion trajectory.

The DM 11 is further configured to, before determining the historical motion trajectories corresponding to the user identifier according to the historical service information, perform at least one of the following operations: when it is determined that the historical service information includes invalid location information, deleting service information corresponding to the invalid location information; and when it is determined that the historical service information includes service information having same location information respectively corresponding to a start time and an end time for a same service, determining the location information corresponding to the start time or the end time as the location information, which corresponds to the same service, in a continuous time period.

The DM 11 may be configured to determine the historical motion trajectories corresponding to the user identifier according to the historical service information in the following manner: classifying the historical service information into the one or more categories according to the similarities between behaviors within different time periods in the set period; and determining historical motion trajectories corresponding to the one or more categories.

The DM 11 may be configured to classify the historical service information into the one or more categories according to the similarities between behaviors within different time periods in the set period in at least one of the following manners: classifying historical service information of time periods corresponding to the same date attribute into the same category according to date attributes of different time periods within the set period; and according to distances between motion trajectories respectively corresponding to any two time periods within the set period, classifying, into the same category, historical service information corresponding to the two time periods of which the distance between the motion trajectories is less than a set value.

The DM 11 may be configured to determine the paging range corresponding to the user identifier according to location information carried in the target motion trajectory in the following manner: determining the paging range corresponding to the user identifier according to a paging range type and a mapping relationship between location information carried in the target motion trajectory and the paging range.

The PM 13 may be further configured to send, according to the paging range corresponding to the user identifier, a paging message to user equipment corresponding to the user identifier located in the paging range.

The PM 13 may be configured to send the paging message to at least one corresponding ultra-dense network (UDN) cell in the paging range, so as to send, through the at least one UDN cell, the paging message to the user equipment corresponding to the user identifier via a common channel.

It should be noted that when the paging apparatus provided in the described embodiments implements paging of user equipment, divisions of the described program modules are only used as examples for illustration. In practical applications, the described operations may be allocated to different program modules to complete according to requirements, that is, an internal structure of the apparatus is divided into different program modules to complete all or a part of the processing described above. It should be noted that the paging apparatus and the paging method embodiments provided in the embodiments of the present disclosure belong to the same concept, and the specific implementation process thereof can refer to the method embodiments for details, which will not be repeated herein.

Some embodiments of the present disclosure further provide a paging device. The paging device includes a processor and a memory for storing executable instructions which are able to run on the processor, wherein when the processor executes the executable instructions, operations of the paging method provided in any embodiment of the present disclosure are executed. Here, the number of the processor and the memory is not limited to one, but may be one or more than one. The paging device may be the base station as shown in Fig. 1. Alternatively, the paging device includes a base station and a server.

Some embodiments of the present disclosure further provide a storage medium, for example, including a memory storing executable instructions. The executable instructions can be executed by a processor, so as to complete the operations of the paging method provided in any embodiment of the present disclosure. The storage medium may be a memory such as FRAM, ROM, PROM, EPROM, EEPROM, Flash Memory, a magnetic surface storage, an optical disk, or a CD-ROM; and may also be various devices that include one or any combination of the described memories.

Hereinafter, by two examples, the paging method provided in some embodiments of the present disclosure will be further described in detail.

### Example 1:

Please refer to Fig. 10, the paging method includes operations S11 to S14.

In operation S11, a DM acquires user information from an RAN or a CN. Herein, the user information is information formed by behavior records corresponding to various types of services performed by UE via corresponding networks.

In operation S12, the DM performs data processing. Herein, the data processing may include removing anomalous data, supplementing missing values, etc..

In operation S13, the DM performs future trajectory prediction.

In operation S14, a PM determines a paging set. Here, the PM acquires a predicted future trajectory from the DM, and determines a set of corresponding paging regions according to location information in the future trajectory.

### Example 2:

Please refer to Fig. 11, the paging method includes operations S21 to S24.

In operation S21, a DM acquires user information from an RAN or a CN. Herein, the user information is information formed by behavior records corresponding to various types of services performed by UE via corresponding networks.

In operation S22, the DM performs data processing. Herein, the data processing may include removing anomalous data, supplementing missing values, etc..

In operation S23, the DM performs future trajectory prediction.

In operation S24, the DM determines a paging set. Here, the DM may acquire a paging range type from a PM, and determine a set of corresponding paging regions according to location information in a future trajectory.

In the embodiments of the present disclosure, a trajectory in a future time period is predicted according to historical motion trajectories of a user. For example, according to historical motion trajectories of the previous 14 weeks, a motion trajectory in a future 15th week or a motion trajectory in one day or several days of the future 15th week is predicted. By predicting a future motion trajectory of a user, a paging range can be greatly narrowed down, reducing signaling transmission and load of the entire network.

The foregoing descriptions are merely specific embodiments of the present disclosure, and the scope of protection of the present disclosure are not limited thereto. A person skilled in the art would have readily conceived of variations or replacements within the technical scope of the claims, and the variations or replacements shall all belong to the scope of protection of the present disclosure. The scope of protection of the present disclosure shall be subject to the scope of protection of the claims.

## Claims

1. A paging method performed by a paging apparatus, wherein the method comprises:
acquiring (101) a target motion trajectory corresponding to a user identifier; and
determining (103) a paging range corresponding to the user identifier according to location information carried in the target motion trajectory, wherein the paging range is used for determining to send a paging message to user equipment corresponding to the user identifier;
wherein the method further comprises: acquiring (104) historical service information, which corresponds to the user identifier, in a set period; determining (105) historical motion trajectories corresponding to the user identifier according to the historical service information, and predicting (105) a target motion trajectory in a next time period relative to a current time according to the historical motion trajectories;
wherein before determining (105) the historical motion trajectories corresponding to the user identifier according to the historical service information, the method further comprises: when it is determined that the historical service information comprises service information having same location information respectively corresponding to a start time and an end time for a same service, determining the location information corresponding to the start time or the end time as the location information, which corresponds to the same service, in a continuous time period between the start time and the end time;
wherein the target motion trajectory corresponding to the user identifier is acquired by the paging apparatus by predicting the target motion trajectory in the next time period relative to the current time according to the historical motion trajectories.

2. The method according to claim 1, wherein determining (105) the historical motion trajectories corresponding to the user identifier according to the historical service information comprises:
generating motion trajectories corresponding to the user identifier according to time and location information carried in the historical service information and corresponding to historical services;
determining whether any two motion trajectories satisfy a trajectory combination condition, and combining the two motion trajectories in a case where the two motion trajectories satisfy the trajectory combination condition; and
obtaining the historical motion trajectories corresponding to the user identifier according to the motion trajectories after the combination;
wherein the trajectory combination condition contains: two motion trajectories have an overlapping point, and the area between the overlapping point and the motion trajectories is less than a first threshold; or the area of two motion trajectories in a set time interval is less than a second threshold.

3. The method according to claim 1, wherein predicting (105) the target motion trajectory in the next time period relative to the current time according to the historical motion trajectories comprises:
predicting the target motion trajectory in the next time period relative to the current time according to historical motion trajectories having a confidence probability satisfying a set condition in the historical motion trajectories.

4. The method according to claim 1, wherein after predicting (105) the target motion trajectory in the next time period relative to the current time according to the historical motion trajectories, the method further comprises:
acquiring motion data uploaded by user equipment when establishment of a wireless connection is completed, and generating a current motion trajectory corresponding to the user identifier according to the motion data; or acquiring a current movement state uploaded by user equipment when establishment of a wireless connection is completed and current location information of the user equipment, and generating a current motion trajectory corresponding to the user identifier according to the current movement state and the current location information; and
updating the target motion trajectory according to the current motion trajectory.

5. The method according to claim 4, wherein updating the target motion trajectory according to the current motion trajectory comprises:
determining whether the current motion trajectory and the target motion trajectory satisfy a trajectory combination condition;
in a case where the current motion trajectory and the target motion trajectory satisfy the trajectory combination condition, combining the current motion trajectory and the corresponding target motion trajectory; and
in a case where the current motion trajectory and the target motion trajectory do not satisfy the trajectory combination condition, adding the current motion trajectory as a new target motion trajectory;
wherein the trajectory combination condition contains: two motion trajectories have an overlapping point, and the area between the overlapping point and the motion trajectories is less than a first threshold; or the area of two motion trajectories in a set time interval is less than a second threshold.

6. The method according to claim 1, wherein before determining (105) the historical motion trajectories corresponding to the user identifier according to the historical service information, the method further comprises:
when it is determined that the historical service information comprises invalid location information, deleting service information corresponding to the invalid location information.

7. The method according to claim 1, wherein determining (105) the historical motion trajectories corresponding to the user identifier according to the historical service information comprises:
classifying the historical service information into one or more categories according to similarities between behaviors within different time periods in the set period; and
determining historical motion trajectories corresponding to the one or more categories;
wherein classifying the historical service information into the one or more categories according to the similarities between behaviors within different time periods in the set period comprises at least one of:
classifying historical service information of time periods corresponding to a same date attribute into the same category according to date attributes of different time periods within the set period; and
according to distances between motion trajectories respectively corresponding to any two time periods within the set period, classifying, into the same category, historical service information corresponding to the two time periods of which the distance between the motion trajectories is less than a set value;
wherein the date attribute refers to a common point capable of reflecting time characteristics contained in a certain period.

8. The method according to claim 1, wherein determining (103) the paging range corresponding to the user identifier according to location information carried in the target motion trajectory comprises:
determining the paging range corresponding to the user identifier according to a paging range type and a mapping relationship between location information carried in the target motion trajectory and the paging range of a corresponding paging range type.

9. The method according to any one of claims 1 to 8, wherein after determining (103) the paging range corresponding to the user identifier according to location information carried in the target motion trajectory, the method further comprises:
sending (106), according to the paging range corresponding to the user identifier, a paging message to user equipment corresponding to the user identifier located in the paging range.

10. The method according to claim 9, wherein sending (106), according to the paging range corresponding to the user identifier, the paging message to the user equipment corresponding to the user identifier located in the paging range comprises:
sending the paging message to at least one corresponding ultra-dense network, UDN, cell in the paging range, and sending, by the at least one UDN cell, the paging message to the user equipment corresponding to the user identifier via a common channel.

11. A paging apparatus configured to: acquire a target motion trajectory corresponding to a user identifier; and determine a paging range corresponding to the user identifier according to location information carried in the target motion trajectory, wherein the paging range is used for determining to send a paging message to user equipment corresponding to the user identifier;
wherein the paging apparatus is further configured to: acquire historical service information, which corresponds to the user identifier, in a set period; determine historical motion trajectories corresponding to the user identifier according to the historical service information, and predict a target motion trajectory in a next time period relative to a current time according to the historical motion trajectories;
wherein the paging apparatus is further configured to perform the following operations before determine the historical motion trajectories corresponding to the user identifier according to the historical service information: when it is determined that the historical service information comprises service information having same location information respectively corresponding to a start time and an end time for a same service, determine the location information corresponding to the start time or the end time as the location information, which corresponds to the same service, in a continuous time period between the start time and the end time;
wherein the target motion trajectory corresponding to the user identifier is acquired by the paging apparatus by predicting the target motion trajectory in the next time period relative to the current time according to the historical motion trajectories.

12. A computer-readable storage medium storing computer-executable instructions, which when executed by a processor of a paging apparatus, causes the paging apparatus to perform the steps of the paging method according to any one of claims 1 to 10.

## Patentansprüche

1. Funkrufverfahren, das von einer Funkrufvorrichtung ausgeführt wird,
wobei das Verfahren umfasst:
Erfassen (101) einer Zielbewegungstrajektorie, die einer Benutzerkennung entspricht; und
Bestimmen (103) eines Funkrufbereichs, der der Benutzerkennung nach den Positionsinformationen, die in der Zielbewegungstrajektorie getragen werden, entspricht, wobei der Funkrufbereich verwendet wird, um zu bestimmen, eine Funkrufnachricht an einem Benutzergerät, das dem Benutzerkennung entspricht, zu senden;
wobei das Verfahren ferner umfasst:
Erfassen (104) historischer Dienstinformationen, die der Benutzerkennung in einer eingestellten Zeitspanne entsprechen; Bestimmen (105) historischer Bewegungstrajektorien, die der Benutzerkennung nach den historischen Dienstinformationen entsprechen, und Vorhersagen (105) einer Zielbewegungstrajektorie in einer nächsten Zeitspanne in Bezug auf eine aktuelle Zeit nach den historischen Bewegungstrajektorien;
wobei vor Bestimmen (105) der historischen Bewegungstrajektorien, die der Benutzerkennung nach den historischen Dienstinformationen entsprechen, das Verfahren ferner umfasst: wenn es bestimmt wird, dass die historischen Dienstinformationen Dienstinformationen umfassen, die jeweils dieselben Positionsinformationen aufweisen, die einer Startzeit und einer Endzeit für einen gleichen Dienst entsprechen, Bestimmen der Positionsinformationen, die der Startzeit oder der Endzeit entsprechen, als die Positionsinformationen, die demselben Dienst in einer kontinuierlichen Zeitspanne zwischen der Startzeit und der Endzeit entsprechen; wobei die Zielbewegungstrajektorie, die der Benutzerkennung entspricht, von der Funkrufvorrichtung durch Vorhersagen der Zielbewegungstrajektorie in der nächsten Zeitspanne in Bezug auf die aktuelle Zeit nach den historischen Bewegungstrajektorien erfasst wird.

2. Verfahren nach Anspruch 1, wobei Bestimmen (105) der historischen Bewegungstrajektorien, die der Benutzerkennung nach den historischen Dienstinformationen entsprechen, umfasst:
Erzeugen Bewegungstrajektorien, die der Benutzerkennung nach den Zeit- und Positionsinformationen entsprechen, die in den historischen Dienstinformationen getragen werden, und die den historischen Diensten entsprechen;
Bestimmen, ob zwei Bewegungstrajektorien eine Trajektorienkombinationsbedingung erfüllen, und Kombinieren der zwei Bewegungstrajektorien in einem Fall, wenn die zwei Bewegungstrajektorien die Trajektorienkombinationsbedingung erfüllen; und
Erhalten der historischen Bewegungstrajektorien, die der Benutzerkennung nach den nach der Kombination erhaltenen Bewegungstrajektorien entsprechen;
wobei die Trajektorienkombinationsbedingung umfasst: zwei Bewegungstrajektorien einen Überlappungspunkt aufweisen, und der Bereich zwischen dem Überlappungspunkt und den Bewegungstrajektorien kleiner als ein erster Schwellenwert ist; oder der Bereich der zwei Bewegungstrajektorien in einem eingestellten Zeitintervall kleiner als ein zweiter Schwellenwert ist.

3. Verfahren nach Anspruch 1, wobei Vorhersagen (105) der Zielbewegungstrajektorie in der nächsten Zeitspanne in Bezug auf die aktuelle Zeit entsprechend den historischen Bewegungstrajektorien umfasst:
Vorhersagen der Zielbewegungstrajektorie in der nächsten Zeitspanne in Bezug auf die aktuelle Zeit nach historischen Bewegungstrajektorien, die eine Vertrauenwahrscheinlichkeit aufweisen, die eine eingestellte Bedingung in den historischen Bewegungstrajektorien erfüllt.

4. Verfahren nach Anspruch 1, wobei nach Vorhersagen (105) der Zielbewegungstrajektorie in der nächsten Zeitspanne in Bezug auf die aktuelle Zeit nach den historischen Bewegungstrajektorien das Verfahren ferner umfasst:
Erfassen Bewegungsdaten, die von dem Benutzergerät hochgeladen werden, wenn der Aufbau einer drahtlosen Verbindung abgeschlossen ist, und Erzeugen einer aktuellen Bewegungstrajektorie, die der Benutzerkennung nach den Bewegungsdaten entspricht; oder Erfassen eines aktuellen Bewegungszustands, der von dem Benutzergerät, wenn der Aufbau einer drahtlosen Verbindung abgeschlossen ist, hochgeladen wird, sowie aktueller Positionsinformationen des Benutzergeräts, und Erzeugen einer aktuellen Bewegungstrajektorie, die der Benutzerkennung nach dem aktuellen Bewegungszustand und den aktuellen Positionsinformationen entspricht; und
Aktualisieren der Zielbewegungstrajektorie nach der aktuellen Bewegungstrajektorie.

5. Verfahren nach Anspruch 4, wobei Aktualisieren der Zielbewegungstrajektorie nach der aktuellen Bewegungstrajektorie umfasst:
Bestimmen, ob die aktuelle Bewegungstrajektorie und die Zielbewegungstrajektorie eine Trajektorienkombinationsbedingung erfüllen;
in einem Fall, wenn die aktuelle Bewegungstrajektorie und die Zielbewegungstrajektorie die Trajektorienkombinationsbedingung erfüllen, Kombinieren der aktuellen Bewegungstrajektorie und der entsprechenden Zielbewegungstrajektorie; und
in einem Fall, wenn die aktuelle Bewegungstrajektorie und die Zielbewegungstrajektorie die Trajektorienkombinationsbedingung nicht erfüllen, Hinzufügen der aktuellen Bewegungstrajektorie als eine neue Zielbewegungstrajektorie;
wobei die Trajektorienkombinationsbedingung umfasst: zwei Bewegungstrajektorien einen Überlappungspunkt aufweisen, und der Bereich zwischen dem Überlappungspunkt und den Bewegungstrajektorien kleiner als ein erster Schwellenwert ist; oder der Bereich der zwei Bewegungstrajektorien in einem eingestellten Zeitintervall kleiner als ein zweiter Schwellenwert ist.

6. Verfahren nach Anspruch 1, wobei vor Bestimmen (105) der historischen Bewegungstrajektorien, die der Benutzerkennung nach den historischen Dienstinformationen entsprechen, das Verfahren ferner umfasst:
wenn es bestimmt wird, dass die historischen Dienstinformationen ungültige Positionsinformationen umfassen, Löschen Dienstinformationen, die den ungültigen Positionsinformationen entsprechen.

7. Verfahren nach Anspruch 1, wobei Bestimmen (105) der historischen Bewegungstrajektorien, die der Benutzerkennung nach den historischen Dienstinformationen entsprechen, umfasst:
Klassifizieren der historischen Dienstinformationen in eine oder mehrere Kategorien nach den Ähnlichkeiten zwischen Verhalten innerhalb verschiedener Zeitspannen in der eingestellten Zeitspanne; und
Bestimmen historischer Bewegungstrajektorien, die den einen oder mehreren Kategorien entsprechen;
wobei Klassifizieren der historischen Dienstinformationen in die eine oder mehreren Kategorien nach den Ähnlichkeiten zwischen Verhalten innerhalb verschiedener Zeitspannen in der eingestellten Zeitspanne mindestens einen der folgenden Punkte umfasst:
Klassifizieren historischer Dienstinformationen von Zeitspannen, die einem gleichen Datumsattribut entsprechen, in die gleiche Kategorie nach den Datumsattributen verschiedener Zeitspannen innerhalb der eingestellten Zeitspanne; und
nach den Abständen zwischen Bewegungstrajektorien, die jeweils zwei Zeitspannen innerhalb der eingestellten Zeitspanne entsprechen, Klassifizieren in dieselbe Kategorie historischer Dienstinformationen, die den zwei Zeitspannen entsprechen, bei denen der Abstand zwischen den Bewegungstrajektorien kleiner als ein eingestellter Wert ist;
wobei das Datumsattribut sich auf einen gemeinsamen Punkt bezieht, der in der Lage ist, zeitliche Merkmale zu reflektieren, die in einer bestimmten Zeitspanne enthalten sind.

8. Verfahren nach Anspruch 1, wobei Bestimmen (103) des Funkrufbereichs, der der Benutzerkennung nach den Positionsinformationen, die in der Zielbewegungstrajektorie getragen werden, entspricht, umfasst:
Bestimmen des Funkrufbereichs, der der Benutzerkennung nach einem Funkrufbereichstyp und einer Abbildungsbeziehung zwischen den Positionsinformationen, die in der Zielbewegungstrajektorie getragen werden und dem Funkrufbereich eines entsprechenden Funkrufbereichstyps entspricht.

9. Verfahren nach einem der Ansprüche 1 bis 8, wobei nach Bestimmen (103) des Funkrufbereichs, der der Benutzerkennung nach den Positionsinformationen in der Zielbewegungstrajektorie entspricht, das Verfahren ferner umfasst:
Senden (106), nach dem Funkrufbereich, der der Benutzererkennung entspricht, einer Funkrufnachricht an ein Benutzergerät, das der Benutzererkennung entspricht, die sich in dem Funkrufbereich befindet,

10. Verfahren nach Anspruch 9, wobei Senden (106), nach dem Funkrufbereich, der der Benutzererkennung entspricht, der Funkrufnachricht an das Benutzergerät, das der Benutzererkennung entspricht, die sich in dem Funkrufbereich befindet, umfasst:
Senden der Funkrufnachricht an mindestens eine entsprechende Zelle eines ultradichten Netzwerks (UDN) in dem Funkrufbereich und Senden der Funkrufnachricht durch die mindestens eine UDN-Zelle über einen gemeinsamen Kanal an das Benutzergerät, das der Benutzerkennung entspricht.

11. Funkrufvorrichtung, die dazu konfiguriert ist, um:
eine Zielbewegungstrajektorie zu erfassen, die einer Benutzerkennung entspricht; und einen Funkrufbereich zu bestimmen, der der Benutzerkennung nach den Positionsinformationen, die in der Zielbewegungstrajektorie getragen werden, entspricht, wobei der Funkrufbereich verwendet wird, um zu bestimmen, eine Funkrufnachricht an ein Benutzergerät, das der Benutzererkennung entspricht, zu senden;
wobei die Funkrufvorrichtung ferner dazu konfiguriert ist, um:
historische Dienstinformationen zu erfassen, die der Benutzerkennung in einer eingestellten Zeitspanne entsprechen; historische Bewegungstrajektorien zu bestimmen, die der Benutzerkennung nach den historischen Dienstinformationen entsprechen, und eine Zielbewegungstrajektorie in einer nächsten Zeitspanne in Bezug auf eine aktuelle Zeit nach den historischen Bewegungstrajektorien vorherzusagen;
wobei die Funkrufvorrichtung ferner dazu konfiguriert ist, folgende Vorgänge auszuführen, bevor die historischen Bewegungstrajektorien zu bestimmen, die der Benutzerkennung nach den historischen Dienstinformationen entsprechen: wenn es bestimmt wird, dass die historischen Dienstinformationen Dienstinformationen umfassen, die jeweils dieselben Positionsinformationen aufweisen, die einer Startzeit und einer Endzeit eines gleichen Dienstes entsprechen, Bestimmen der Positionsinformationen, die der Startzeit oder der Endzeit entsprechen, als die Positionsinformationen, die demselben Dienst in einer kontinuierlichen Zeitspanne zwischen der Startzeit und der Endzeit entsprechen;
wobei die Zielbewegungstrajektorie, die der Benutzerkennung entspricht, von der Funkrufvorrichtung durch Vorhersagen der Zielbewegungstrajektorie in der nächsten Zeitspanne in Bezug auf die aktuelle Zeit nach den historischen Bewegungstrajektorien erfasst wird.

12. Computerlesbares Speichermedium, das computerlesbare Anweisungen speichert, die, wenn sie von einem Prozessor einer Funkrufvorrichtung ausgeführt werden, die Funkrufvorrichtung veranlassen, die Schritte des Funkrufverfahrens nach einem der Ansprüche 1 bis 10 auszuführen.

## Revendications

1. Un procédé de radiomessagerie mis en œuvre par un appareil de radiomessagerie, lequel procédé comprend :
acquérir (101) une trajectoire de mouvement cible correspondant à un identifiant d'utilisateur et;
déterminer (103) une plage de radiomessagerie correspondant à l'identifiant d'utilisateur selon des informations de position portées dans la trajectoire de mouvement cible, la plage de radiomessagerie étant utilisée pour déterminer l'envoi d'un message de radiomessagerie à un équipement utilisateur correspondant à l'identifiant d'utilisateur ;
le procédé comprenant en outre : acquérir (104) des informations de service historiques, lesquelles correspondent à l'identifiant d'utilisateur, pendant une période définie ; déterminer (105) des trajectoires de mouvement historiques correspondant à l'identifiant d'utilisateur selon les informations de service historiques, et prédire (105) une trajectoire de mouvement cible dans une période suivante par rapport à un temps actuel selon les trajectoires de mouvement historiques ;
avant de déterminer (105) les trajectoires de mouvement historiques correspondant à l'identifiant d'utilisateur selon les informations de service historiques, le procédé comprend en outre : lorsqu'il est déterminé que les informations de service historiques comprennent des informations de service ayant les mêmes informations de position correspondant respectivement à une heure de début et une heure de fin pour un même service, déterminer les informations de position correspondant à l'heure de début ou à l'heure de fin comme étant les informations de position correspondant au même service, pendant une période continue entre l'heure de début et l'heure de fin ;
la trajectoire de mouvement cible correspondant à l'identifiant d'utilisateur étant acquise par l'appareil de radiomessagerie en prédisant la trajectoire de mouvement cible dans la période suivante par rapport au temps actuel selon les trajectoires de mouvement historiques.

2. Le procédé selon la revendication 1, dans lequel déterminer (105) les trajectoires de mouvement historiques correspondant à l'identifiant d'utilisateur selon les informations de service historiques comprend :
générer des trajectoires de mouvement correspondant à l'identifiant d'utilisateur selon des informations de temps et de position portées dans les informations de service historiques et correspondant à des services historiques ;
déterminer si deux trajectoires de mouvement satisfont à une condition de combinaison de trajectoires, et combiner les deux trajectoires de mouvement dans le cas où les deux trajectoires satisfont à la condition de combinaison ; et
obtenir les trajectoires de mouvement historiques correspondant à l'identifiant d'utilisateur selon les trajectoires de mouvement après la combinaison ;
la condition de combinaison de trajectoires comprenant : deux trajectoires de mouvement ayant un point de chevauchement, et la zone entre le point de chevauchement et les trajectoires de mouvement étant inférieure à un premier seuil ; ou la zone de deux trajectoires de mouvement dans un intervalle de temps défini étant inférieure à un second seuil.

3. Le procédé selon la revendication 1, dans lequel prédire (105) la trajectoire de mouvement cible dans la période suivante par rapport au temps actuel selon les trajectoires de mouvement historiques comprend :
prédire la trajectoire de mouvement cible dans la période suivante par rapport au temps actuel selon des trajectoires de mouvement historiques ayant une probabilité de confiance satisfaisant une condition définie dans les trajectoires de mouvement historiques.

4. Le procédé selon la revendication 1, dans lequel après avoir prédit (105) la trajectoire de mouvement cible dans la période suivante par rapport au temps actuel selon les trajectoires de mouvement historiques, le procédé comprend en outre :
acquérir des données de mouvement téléchargées par l'équipement utilisateur lorsque l'établissement d'une connexion sans fil est terminé, et générer une trajectoire de mouvement actuelle correspondant à l'identifiant d'utilisateur selon les données de mouvement ; ou acquérir un état de déplacement actuel téléchargé par l'équipement utilisateur si l'établissement d'une connexion sans fil est terminé et des informations de position actuelles de l'équipement utilisateur, et générer une trajectoire de mouvement actuelle correspondant à l'identifiant d'utilisateur selon l'état de déplacement actuel et les informations de position actuelles ;
et mettre à jour la trajectoire de mouvement cible selon la trajectoire de mouvement actuelle.

5. Le procédé selon la revendication 4, dans lequel mettre à jour la trajectoire de mouvement cible selon la trajectoire de mouvement actuelle comprend :
déterminer si la trajectoire de mouvement actuelle et la trajectoire de mouvement cible satisfont à une condition de combinaison de trajectoires ;
dans le cas où la trajectoire de mouvement actuelle et la trajectoire de mouvement cible satisfont à la condition de combinaison de trajectoires, combiner la trajectoire de mouvement actuelle et la trajectoire de mouvement cible correspondante ; et
dans le cas où la trajectoire de mouvement actuelle et la trajectoire de mouvement cible ne satisfont pas à la condition de combinaison de trajectoires, ajouter la trajectoire de mouvement actuelle comme une nouvelle trajectoire de mouvement cible ;
la condition de combinaison de trajectoires comprenant : deux trajectoires de mouvement ayant un point de chevauchement, et la zone entre le point de chevauchement et les trajectoires de mouvement étant inférieure à un premier seuil ; ou la zone de deux trajectoires de mouvement dans un intervalle de temps défini étant inférieure à un second seuil.

6. Le procédé selon la revendication 1, dans lequel avant de déterminer (105) les trajectoires de mouvement historiques correspondant à l'identifiant d'utilisateur selon les informations de service historiques, le procédé comprend en outre :
lorsqu'il est déterminé que les informations de service historiques comprennent des informations de position invalides, supprimer les informations de service correspondant aux informations de position invalides.

7. Le procédé selon la revendication 1, dans lequel déterminer (105) les trajectoires de mouvement historiques correspondant à l'identifiant d'utilisateur selon les informations de service historiques comprend :
classer les informations de service historiques en une ou plusieurs catégories selon des similarités entre comportements pendant différentes périodes de temps dans la période définie ; et
déterminer les trajectoires de mouvement historiques correspondant à une ou plusieurs catégories ;
le classement des informations de service historiques dans une ou plusieurs catégories selon les similarités entre comportements pendant différentes périodes de temps dans la période définie comprenant au moins l'un des éléments suivants :
classer les informations de service historiques de périodes correspondant à un même attribut de date dans une même catégorie selon les attributs de date des différentes périodes dans la période définie ; et
selon des distances entre des trajectoires de mouvement respectivement correspondant à deux périodes quelconques dans la période définie, classer, dans une même catégorie, les informations de service historiques correspondant aux deux périodes dont la distance entre les trajectoires de mouvement est inférieure à une valeur définie ;
l'attribut de date se référant à un point commun apte à refléter des caractéristiques temporelles contenues dans une certaine période.

8. Le procédé selon la revendication 1, dans lequel déterminer (103) la plage de radiomessagerie correspondant à l'identifiant d'utilisateur selon des informations de position portées dans la trajectoire de mouvement cible comprend :
déterminer la plage de radiomessagerie correspondant à l'identifiant d'utilisateur selon un type de plage de radiomessagerie et une relation de correspondance entre les informations de position portées dans la trajectoire de mouvement cible et la plage de radiomessagerie d'un type de plage de radiomessagerie correspondant.

9. Le procédé selon l'une quelconque des revendications 1 à 8, dans lequel après avoir déterminé (103) la plage de radiomessagerie correspondant à l'identifiant d'utilisateur selon les informations de position portées dans la trajectoire de mouvement cible, le procédé comprend en outre :
envoyer (106), selon la plage de radiomessagerie correspondant à l'identifiant d'utilisateur, un message de radiomessagerie à un équipement utilisateur correspondant à l'identifiant d'utilisateur situé dans la plage de radiomessagerie.

10. Le procédé selon la revendication 9, dans lequel envoyer (106), selon la plage de radiomessagerie correspondant à l'identifiant d'utilisateur, le message de radiomessagerie à l'équipement utilisateur correspondant à l'identifiant d'utilisateur situé dans la plage de radiomessagerie comprend :
envoyer le message de radiomessagerie à au moins une cellule de réseau ultra-dense, UDN, correspondante dans la plage de radiomessagerie, et envoyer, par l'au moins une dite cellule UDN, le message de radiomessagerie à l'équipement utilisateur correspondant à l'identifiant d'utilisateur via un canal commun.

11. Un appareil de radiomessagerie configuré pour :
acquérir une trajectoire de mouvement cible correspondant à un identifiant d'utilisateur ; et déterminer une plage de radiomessagerie correspondant à l'identifiant d'utilisateur selon les informations de position portées dans la trajectoire de mouvement cible, la plage de radiomessagerie étant utilisée pour déterminer l'envoi d'un message de radiomessagerie à un équipement utilisateur correspondant à l'identifiant d'utilisateur ;
l'appareil de radiomessagerie étant en outre configuré pour :
acquérir des informations de service historiques, lesquelles correspondent à l'identifiant d'utilisateur, pendant une période définie ;
déterminer des trajectoires de mouvement historiques correspondant à l'identifiant d'utilisateur selon les informations de service historiques, et prédire
une trajectoire de mouvement cible dans une période suivante
par rapport à un temps actuel selon les trajectoires de mouvement historiques ;
l'appareil de radiomessagerie étant en outre configuré pour exécuter les opérations suivantes avant de déterminer les trajectoires de mouvement historiques correspondant à l'identifiant d'utilisateur selon les informations de service historiques : lorsqu'il est déterminé que les informations de service historiques comprennent des informations de service ayant les mêmes informations de position correspondant respectivement à une heure de début et une heure de fin pour un même service, déterminer les informations de position correspondant à l'heure de début ou à l'heure de fin comme étant les informations de position correspondant au même service, pendant une période continue entre l'heure de début et l'heure de fin ;
la trajectoire de mouvement cible correspondant à l'identifiant d'utilisateur étant acquise par l'appareil de radiomessagerie en prédisant la trajectoire de mouvement cible dans la période suivante par rapport au temps actuel selon les trajectoires de mouvement historiques.

12. Un support de stockage lisible par ordinateur stockant des instructions exécutables par ordinateur, lesquelles, lorsqu'elles sont exécutées par un processeur d'un appareil de radiomessagerie, amènent l'appareil de radiomessagerie à exécuter les étapes du procédé de radiomessagerie selon l'une quelconque des revendications 1 à 10.
